Europäisches Patentamt

European Patent Office

Office européen des brevets

(11) Publication number: **0 471 360 A1**

## EUROPEAN PATENT APPLICATION

(21) Application number: **91113656.2**

(22) Date of filing: **14.08.91**

(51) Int. Cl.5: **G11B 5/84**, G11B 5/64, G11B 5/62

(30) Priority: **14.08.90 JP 214552/90**
**28.09.90 JP 262074/90**
**14.02.91 JP 21147/91**

(43) Date of publication of application:
**19.02.92 Bulletin 92/08**

(84) Designated Contracting States:
**DE FR GB**

(71) Applicant: **Fuji Photo Film Co., Ltd.**
**210 Nakanuma Minamiashigara-shi**
**Kanagawa-ken(JP)**

(72) Inventor: **Funabashi, Makoto**
**2-12-1 Oogi-cho**
**Odawara-shi, Kanagawa-ken(JP)**
Inventor: **Yasunaga, Tadashi**
**2-12-1 Oogi-cho**
**Odawara-shi, Kanagawa-ken(JP)**
Inventor: **Kanazawa, Minoru**
**2-12-1 Oogi-cho**
**Odawara-shi, Kanagawa-ken(JP)**

(74) Representative: **Patentanwälte Dr. Solf & Zapf**
**Zeppelinstrasse 53**
**W-8000 München 80(DE)**

(54) Magnetic recording medium and method of manufacturing the same.

(57) A magnetic recording medium is formed of a non-magnetic base and an iron nitride ferromagnetic thin-film formed on the non-magnetic base. A method of manufacturing such a magnetic recording medium is characterized by the step of causing an iron vapor flow to impinge upon the non-magnetic base at an angle of incidence of not smaller than 30° while exposing the non-magnetic base to a nitrogen ion current at an acceleration voltage not higher than 200V so that the current density of the nitrogen ion current on the non-magnetic base is not lower than $0.3mA/cm^2$, the nitrogen ion current containing therein nitrogen as the major component.

Field of the Invention

This invention relates to a thin-film magnetic recording medium suitable for high-density recording, and a method of manufacturing the same.

Description of the Prior Art

Recently there has been an increasing demand for high-density magnetic recording and there has been a growing tendency to shorten the recording wavelength in order to meet the demand. Though it has been said that the vertical magnetization system is preferable due to small demagnetization in the high-density range, the vertical magnetization system encounters a problem that the reproduction output is limited when the magnetic layer which is of complete vertically magnetized film is used together with a ring head. When a ring head is used, a magnetic thin-film having slightly tilted axes of easy magnetization is more preferable from the viewpoint of the high-density recording.

In order to increase the recording density, it is advantageous to use a ferromagnetic thin-film recording medium. However the ferromagnetic thin-film generally has the disadvantage of being readily corroded.

Particularly the metal thin-film magnetic recording medium having Co-Ni oblique deposit disclosed in Japanese Patent Publication No. 41(1966)-19389 or United States Patent No. 4,477,489 is readily corroded or oxidized, is inferior in weathering resistance, and is expensive.

The iron nitride film disclosed in United States Patent Nos. 4,835,068 and 4,988,535 and Japanese Unexamined Patent Publication Nos. 63(1988)-152017 or 63(1988)-152019 is excellent in weathering resistance and can be manufactured at low cost. However an iron nitride film generally has the disadvantage of being low in film-forming speed.

Japanese Patent Publication No. 62(1987)-49725, Japanese Unexamined Patent Publication No. 60-(1985)-28028 and the like say that by ion-plating with the angle of incidence of an iron vapor flow on a non-magnetic base kept not smaller than 50$^\circ$, an iron nitride film having excellent magnetic properties can be obtained. However it has been found that, according to the method, quality of the film deteriorates due to low degree of vacuum and the magnetic properties of the iron nitride film are not so excellent as those of said Co-Ni ferromagnetic thin-film.

It has been found that it is difficult to form an iron nitride film having a large area at a high speed by ion-assist deposition disclosed in Japanese Unexamined Patent Publication Nos. 62(1987)-1121, 63(1988)-237219 and 63(1988)-281225 due to a low film-forming speed.

In Japanese Unexamined Patent Publication Nos. 59(1984)-228705 and 61(1986)-110328, there is disclosed forming of a vertical magnetization recording medium containing therein iron nitride by sputtering. However, also according to this method, the film-forming speed is too low.

In "Abstract of Scientific Lecture at 13th Japanese Applied Magnetics Academy (1989)", p408, there is disclosed a method of forming a vertical magnetization iron nitride thin-film by ion-assist deposition. However the method is disadvantageous in that the film-forming speed is low as compared with forming Co-Ni thin film by deposition and the thin-film obtained by the method is inferior in anisotropic magnetic field to Co-Cr thin-film formed by deposition. Further since being a vertical magnetization thin-film, the thin-film obtained by the method is not suitable for the horizontal magnetization system using the ring head.

Crystal grains forming the iron nitride thin-film are apt to be planar in shape, and accordingly, the axis of easy magnetization two-dimensionally moves in the plane and the tilt of the axis of easy magnetization relative to the non-magnetic base tends to be smaller than the tilt of the crystal grains relative to the non-magnetic base, which results in reduction of the vertical components and limitation of the output.

SUMMARY OF THE INVENTION

In view of the foregoing observations and description, the primary object of the present invention is to provide a thin-film magnetic recording medium which is excellent in resistance to corrosion and has a large S/N ratio and to provide a method of manufacturing such a recording medium.

The magnetic recording medium in accordance with the present invention comprises a non-magnetic base and an iron nitride ferromagnetic thin-film formed on the non-magnetic base and is characterized in that the iron nitride ferromagnetic thin-film is formed by causing an iron vapor flow to impinge upon the non-magnetic base at an angle of incidence of not smaller than 30$^\circ$ while exposing the non-magnetic base to a nitrogen ion current at an acceleration voltage not higher than 200V so that the current density of the nitrogen ion current on the non-magnetic base is not lower than 0.3mA/cm$^2$, the nitrogen ion current containing therein nitrogen as the major component.

The method of manufacturing a magnetic recording medium comprising a non-magnetic base and an iron nitride ferromagnetic thin-film formed on the non-magnetic base in accordance with the present invention is characterized by the step of causing an iron vapor flow to impinge upon the non-magnetic base at an angle of incidence of not smaller than 30° while exposing the non-magnetic base to a nitrogen ion current at an acceleration voltage not higher than 200V so that the current density of the nitrogen ion current on the non-magnetic base is not lower than 0.3mA/cm$^2$, the nitrogen ion current containing therein nitrogen as the major component.

In accordance with the present invention, a magnetic recording medium having an iron nitride ferromagnetic thin-film which is excellent in resistance to corrosion can be manufactured at high speed and at low cost. Further in accordance with the present invention, since the film-forming speed is increased, a magnetic recording medium in the form of a tape can be obtained by continuous film-forming.

Further, the iron nitride ferromagnetic thin-film of the magnetic recording medium obtained by the present invention is rich in the vertical magnetization component and is more suitable for the high-density recording. Especially, since the axis of easy magnetization is closer to the vertical than that of the conventional iron nitride thin-films, the magnetic recording medium in accordance with the present invention can be advantageously used together with the ring head in the high-density recording range. Though the reason why such a result is obtained has not been sufficiently understood, the fact that the thin-film is formed while the non-magnetic base is exposed to an ion current containing therein nitrogen as the major component at low energy (at a low acceleration voltage) and at a high current density maybe contributes to it.

Preferably the iron nitride ferromagnetic thin-film is formed of prismatic grains of iron nitride which are 20 to 100 nm (200 to 1000Å) in smaller diameter and 100 to 350nm (1000 to 3500Å) in larger diameter and the angle which the axes of the prismatic grains make with the non-magnetic base is in the range of 45° to 85°. In this specification "the angle which the axes of the prismatic grains make with the non-magnetic base" means "the average of the angles which the longer axes of the prismatic grains make with the surface of the non-magnetic base as seen in cross-section. So long as the average of the angles which the longer axes of the typical prismatic grains make with the surface of the non-magnetic base is in the range identified above, it may be considered that the angle which the axes of the prismatic grains make with the non-magnetic base is in the range even if the longer axes of some of the grains are not in the range.

When the ferromagnetic thin-film is formed of prismatic grains of iron nitride, the resistance to corrosion of the thin-film is greatly improved, and when the size of the prismatic grains is in the range identified above, noise can be reduced and the output can be increased.

When the smaller diameter and/or the larger diameter is smaller than the range identified above, the output cannot be sufficiently increased. On the other hand, when the smaller diameter and/or the larger diameter is larger than the range identified above, the grains becomes planar in shape and the tilt of the axis of easy magnetization relative to the non-magnetic base tends to be smaller than the tilt of the crystal grains relative to the non-magnetic base, whereby noise is increased and the output is reduced.

The thickness of the iron nitride ferromagnetic thin-film is preferably 0.02 to 5.0 $\mu$m, and more preferably 0.05 to 2.0$\mu$m. When the thickness of the iron nitride ferromagnetic thin-film is too large, the surface condition of the thin-film deteriorates and a sufficient electromagnetic conversion efficiency cannot be obtained. On the other hand, when the thickness of the iron nitride ferromagnetic thin-film is too small, satisfactory magnetic properties cannot be obtained.

In this specification, "the iron nitride ferromagnetic thin-film" means a ferromagnetic thin-film which contains as the major component a compound of iron and nitride having at least one crystal structure of $\alpha$-Fe, $\alpha''$-Fe$_8$N, $\gamma'$-Fe$_4$N, $\epsilon$-Fe$_{2-3}$N and $\zeta$-Fe$_2$N. An appropriate amount of O, a ferromagnetic metal element such as Co, Ni and the like, a corrosion resistant element such as Cr, Ti and Al, and the like may be added to the iron nitride ferromagnetic thin-film.

The ferromagnetic thin-film may be formed, for instance, by ion-assist deposition using iron vapor flow and nitrogen ion current.

Preferably the iron vapor flow contains iron as the major component though it may further contain the elements described above. The iron vapor flow can be obtained by heating, for instance by an electron beam or a high-frequency induction heating, under vacuum and vaporizing metal material containing iron. In accordance with the present invention, iron is deposited on the non-magnetic base by causing the iron vapor flow to impinge upon the non-magnetic base at an angle of incidence of not smaller than 30° as described above. When the angle of incidence is in the range of 40° to 90°, the angle which the axes of the prismatic grains make with the non-magnetic base falls within the range of 45° to 85° which is preferable as described above. In this specification, "the angle of incidence" means the angle which the central axis of the iron vapor flow makes with a normal to the non-magnetic base.

The evaporation rate of the iron vapor flow depends upon the desired film-forming speed and the time required for sufficient formation of iron nitride, and is preferably 0.5 to 20 nm/sec (5 to 200Å/sec) and more preferably 10 to 20 nm/sec (100 to 200Å/sec).

In accordance with the present invention, the nitrogen ion current should contain at least 50% nitrogen and may contain other components such as oxygen, inert gas or the like. It is preferred that the nitrogen ion current contains at least 60% nitrogen.

Though the nitrogen ion current may be formed by any known ion forming means, an end-Hall type ion gun, which can produce a high current density at a low acceleration voltage, is conveniently used for exposing the non-magnetic base to the nitrogen ion current at an acceleration voltage not higher than 200V so that the current density of the ion current on the non-magnetic base is not lower than $0.3mA/cm^2$.

The end-Hall type ion gun mainly differs from a Kaufman type ion gun which has been commonly used in that it has no grid. Ion guns having no grid produce active elements which promote nitriding of the thin-film such as ions, exciting molecules, electrons and the like more than ion guns having a grid, and are more suitable for high-speed film-forming. Further, it is presumed that the end-Hall type ion gun produces ions having an energy distribution whereas the Kaufman type ion gun produces ions having a definite energy which is determined according to the voltage applied to the grid, which maybe produces the desired results.

In accordance with the present invention, by making larger the flow rate of the nitrogen ion current than the flow rate of the iron vapor flow and by suppressing the film-forming speed to some extent, the shape of crystal grains formed on the non-magnetic base can be made as described above.

Though the nitrogen ion current may impinge upon the non-magnetic base at any angle, preferably the nitrogen ion current impinges upon the non-magnetic base substantially in parallel to the iron vapor flow.

It is preferred that the iron nitride ferromagnetic thin-film is formed in an atmosphere containing therein oxygen in addition to nitrogen. When oxygen exists in the atmosphere, the vertical coercive force and/or the squareness ratio increase and at the same time the anisotropic magnetic field improves. This may be because not only iron nitride but also iron oxide is formed and crystal gains which form each magnetic domain becomes fine.

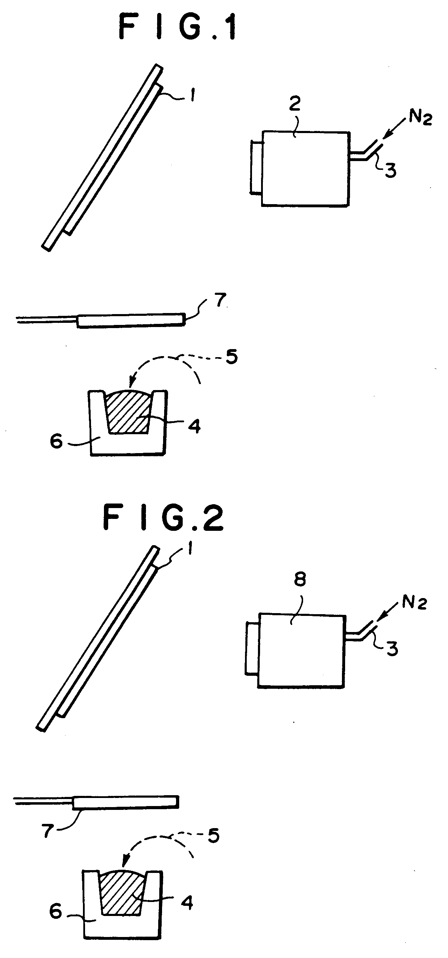

The coercive force, the saturation flux density and the squareness ratio of the iron nitride ferromagnetic thin-film in accordance with the present invention as measured with an external magnetic field applied to the thin-film surface in perpendicular thereto are preferably 600 to 2000Oe, 2000 to 8000G and not smaller than 0.1, respectively, and more preferably 800 to 2000Oe, 3000 to 6000G and not smaller than 0.4, respectively. When the saturation flux density is excessively large, the resistance to corrosion deteriorates. The anisotropic magnetic field Hk obtained on the basis of a B-H curve measured in the direction parallel to the thin-film surface and perpendicular to the surface of the paper on which Figure 1 is drawn, the thin-film being indicated at 1 in Figure 1, is preferably not smaller than 1kOe and more preferably not smaller than 2kOe.

It is preferred that the non-magnetic base is of plastic material such as polyethylene terephthalate, polyimide, polyamide, polyvinyl chloride cellulose acetate, polycarbonate, polyethylene naphthalate or the like. Since the non-magnetic base can be subjected to a high temperature during formation of the iron nitride ferromagnetic thin-film, it is more preferred that the non-magnetic base be of polyimide, polyamide or polyethylene terephthalate which is excellent in resistance to heat. The non-magnetic base is generally 5 to $20\mu$ in thickness and more preferably 6 to $15\mu$ in thickness.

BRIEF DESCRIPTION OF THE DRAWINGS

Figure 1 is a schematic view showing an ion-assist deposition system which was used to form magnetic recording media in accordance with the present invention,

Figure 2 is a schematic view showing an ion-assist deposition system which was used to form control magnetic recording media,

Figures 3A and 3B are graphs respectively showing a B-H curve in the vertical direction and a B-H curve along the surface of the thin-film for the magnetic recording medium obtained with the evaporation rate of iron set at 3nm/sec (30Å/sec) in the embodiment 1,

Figure 4 is a graph showing the relation between the evaporation rate and the vertical coercive force Hc in the embodiment 1 to 3 and the control 1,

Figure 5 is a graph showing the change in the vertical coercive force Hc with direction when the B-H was measured in various directions in a plane normal to the surface of the thin film for the magnetic recording medium obtained with the evaporation rate of iron set at 3nm/sec (30Å/sec) in the embodiment 1,

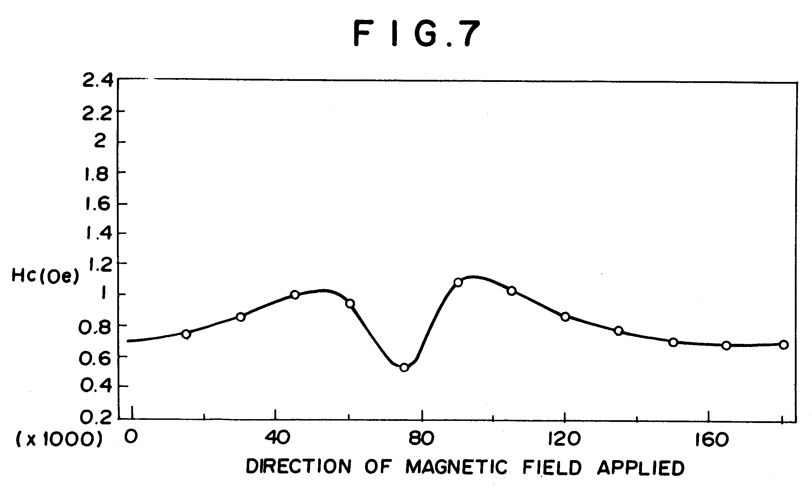

Figures 6A and 6B are graphs respectively showing a B-H curve in the vertical direction and a B-H curve

4

along the surface of the thin-film for the magnetic recording medium obtained in the control 2, and Figure 7 is a graph showing the change in the vertical coercive force Hc with direction when the B-H was measured in various directions in a plane normal to the surface of the thin film for the magnetic recording medium obtained in the control 2.

DESCRIPTION OF THE PREFERRED EMBODIMENTS

Embodiment 1

Using an ion-assist deposition system which was schematically shown in Figure 1, magnetic recording media in accordance with an embodiment of the present invention were manufactured. Polyimide resin film having a thickness of $50\mu$m was used as the non-magnetic base 1.

An end-Hall type ion gun MARK-II (Commonwealth Scientific Corporation) 2 was used as the ion gun. The distance between the non-magnetic base 1 and the end-Hall type ion gun 2 was 30cm. Nitrogen gas was introduced through a gas inlet 3 and the acceleration voltage was set at 100V.

An electron beam heating system JEBG-102UB available from NIHON DENSHI was used to emit an electron beam 5 for evaporating iron 4 in a crucible 6 made of magnesium. The distance between the non-magnetic base 1 and the evaporation source was set at 40cm and the evaporation source was positioned relative to the non-magnetic base 1 so that the angle of incidence of the iron vapor flow became 65°.

The ion-assist deposition system was placed in a vacuum chamber (not shown) and the vacuum chamber was pre-evacuated to $5\times10^{-5}$ Torr. While the iron 4 in the crucible 6 was heated and melt by the electron beam 5, the evaporation rate of iron was monitored by a quartz oscillation type film-thickness monitor (XTM manufactured by INFICON Co. ) and the current of electron beam 5 was controlled so that evaporation rate became a predetermined value which will be described later.

After the non-magnetic base 1 was exposed to a nitrogen ion current, whose current density was $0.5mA/cm^2$, for 2 minutes by use of the ion gun 2, thereby eliminating water content of the non-magnetic base 1 and cleaning the surface of the same, a shutter 7 above the evaporation source was opened to start film-forming with exposure of the non-magnetic base 1 to the nitrogen ion current continued. When the film thickness reached 2000Å, the shutter 7 was closes and at the same time exposure of the non-magnetic base 1 to the nitrogen ion current was stopped.

While the angle of incidence of the iron vapor flow to the non-magnetic base and the current density of the nitrogen ion current were fixed, and the above steps were carried out for different evaporation rates of iron, 1nm/sec (10Å/sec), 3nm/sec (30Å/sec), 7nm/sec(70Å/sec) and 10nm/sec(100Å/sec).

Embodiment 2

Magnetic recording media were manufactured in the same manner as in the embodiment 1 except that the angle of incidence of the iron vapor flow was 75°.

Embodiment 3

Magnetic recording media were manufactured in the same manner as in the embodiment 1 except that the angle of incidence of the iron vapor flow was 30°.

Control 1

Magnetic recording media were manufactured in the same manner as in the embodiment 1 except that the angle of incidence of the iron vapor flow was 10°.

Control 2

Magnetic recording media were manufactured in the same manner as in the embodiment 1 except that a Kaufman type ion gun (Commonwealth Scientific Corporation) 8 was used instead of the end-Hall type ion gun as shown in Figure 2, the current density of the nitrogen ion current was set at $0.1mA/cm^2$, and the evaporation rate of iron was set at 1nm/sec (10Å/sec).

Then the magnetic recording media manufactured by the embodiments 1 to 3 and the controls 1 and 2 were evaluated. The result was as follows.

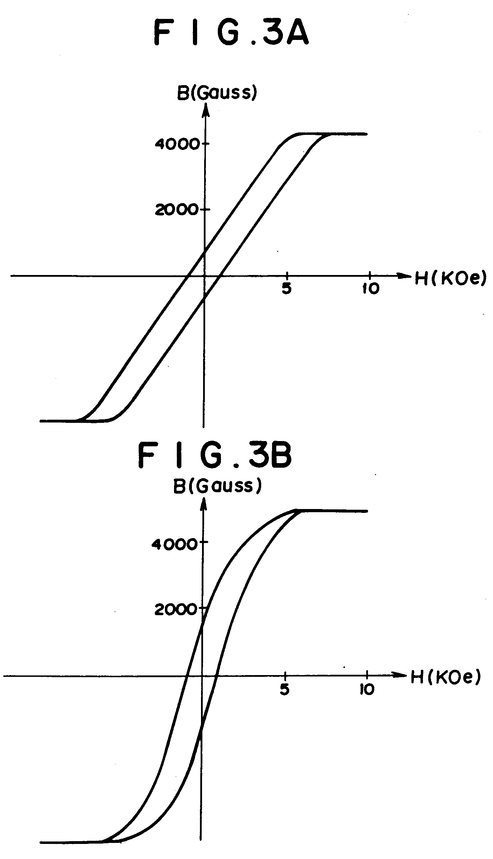

Figures 3A and 3B are graphs respectively showing a B-H curve in the vertical direction and a B-H curve along the surface of the thin-film in parallel to the surface of the paper on which Figure 1 is drawn for the magnetic recording medium obtained with the evaporation rate of iron set at 3nm/sec (30Å/sec) in the embodiment 1. Measurement was effected by use of a sample-vibration type magnetometer (VSMP-1 manufactured by TOEI Co. ) Correction of the B-H curve in the vertical direction based on diamagnetic field was not effected. The film thickness on the basis of which the magnetic flux density was calculated was measured by use of a feeler-type surface roughness meter (DEKTAK-2A manufactured by Sloan Co. ) As can be understood from Figures 3A and 3B, the iron nitride ferromagnetic thin-film of the magnetic recording medium was oriented rather in the vertical direction than in the direction parallel to the surface of the thin-film.

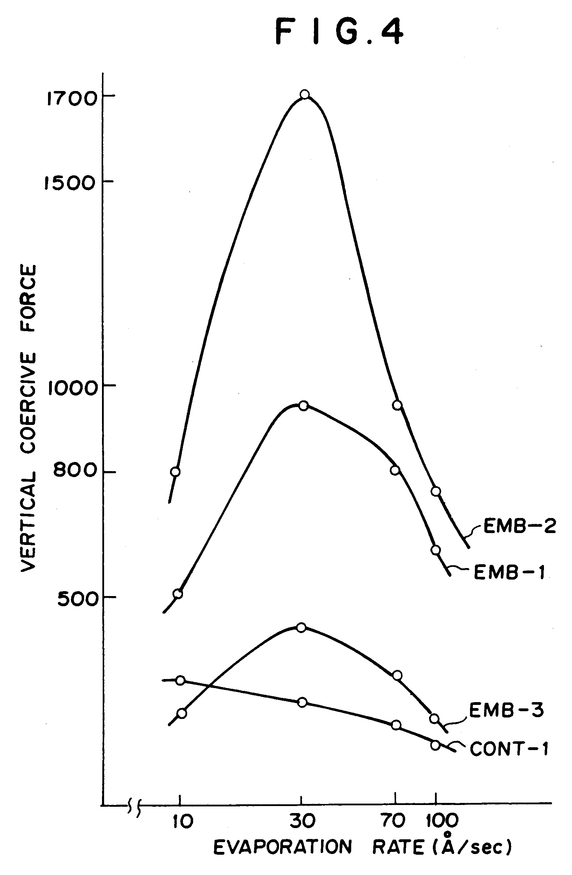

Figure 4 shows the relation between the evaporation rate and the vertical coercive force Hc in the embodiment 1 to 3 and the control 1. As can be understood from Figure 4, any of the embodiments is substantially superior to the control in the vertical coercive force.

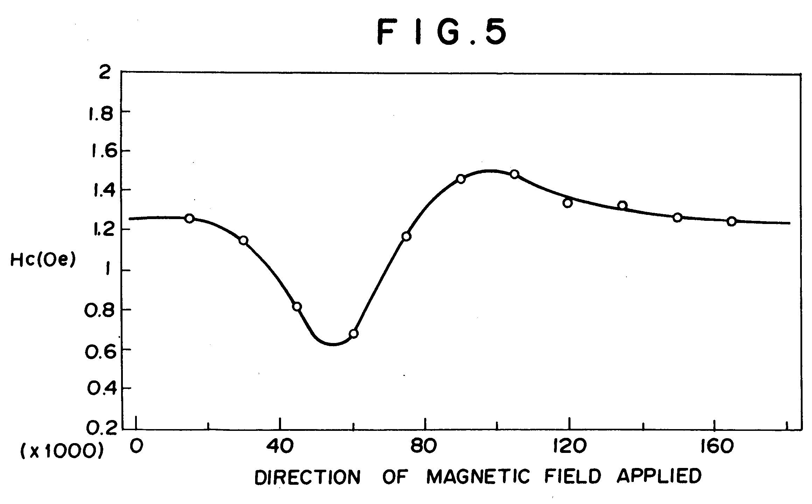

Figure 5 is a graph showing the change in the vertical coercive force Hc with direction when the B-H was measured in various directions in a plane normal to the surface of the thin film for the magnetic recording medium obtained with the evaporation rate of iron set at 3nm/sec (30Å/sec] in the embodiment 1. In Figure 5, 0° and 180° indicate the direction in which the surface of the thin-film extends, and 90° indicate the direction normal to the surface of the thin-film. If the thin-film is magnetized completely along its surface, the coercive force is minimzed in the direction of 90°. Taking into account the influence of the diamagnetic field, it can be determined from Figure 5, the axis of easy magnetization of the thin-film of the magnetic recording medium is at about 45° to the surface of the film.

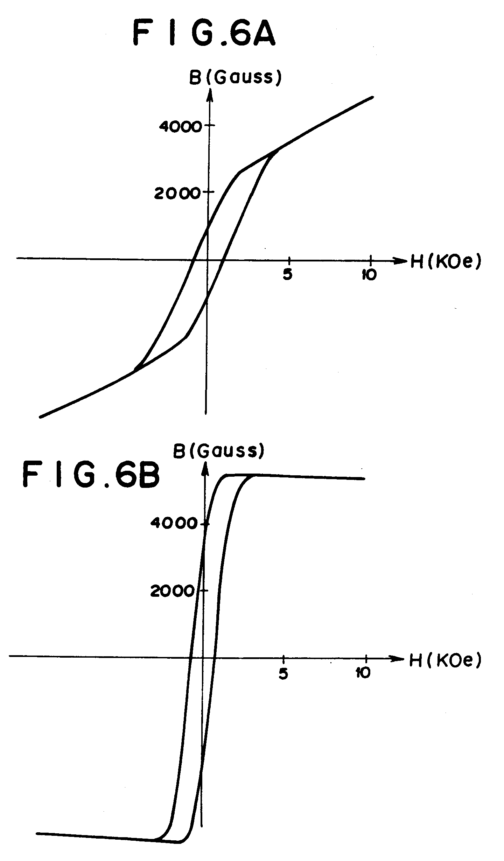

Figures 6A and 6B are graphs respectively showing a B-H curve in the vertical direction and a B-H curve along the surface of the thin-film in parallel to the surface of the paper on which Figure 1 is drawn for the magnetic recording medium obtained in the control 2. As can be understood from Figures 6A and 6B, the iron nitride ferromagnetic thin-film of the magnetic recording medium was oriented rather in the direction parallel to the surface of the thin-film than in the vertical direction.

Figure 7 is a graph showing the change in the vertical coercive force Hc with direction when the B-H was measured in various directions in a plane normal to the surface of the thin film for the magnetic recording medium obtained in the control 2. In Figure 7, 0° and 180° indicate the direction in which the surface of the thin-film extends, and 90° indicate the direction normal to the surface of the thin-film. It can be determined from Figure 7, the axis of easy magnetization of the thin-film of the magnetic recording medium is at about 20° to the surface of the film.

In the magnetic recording media obtained in the embodiments 1 to 3, the thin-films were excellent in the resistance to corrosion though iron was evaporated at 10nm/sec (100Å/sec). On the other hand, the thin-films of the magnetic recording media obtained in the control 2 were poor in the resistance to corrosion though iron was evaporated at 1nm/sec (10Å/sec) in the control 2.

Embodiment 4

Magnetic recording media A to E were manufactured in the same manner as in the embodiment 1 except that the range of the angle of incidence of the iron vapor flow, the current density of the nitrogen ion current and the evaporation rate of iron were changed as shown in table 1.

Table 1

| | | angle of incidence | current density (mA/cm$^2$) | evaporation rate (Å/sec) nm/sec |
|---|---|---|---|---|
| | A | +70 to +90 | 0.5 | 1 (10) |
| | B | +60 to +80 | 0.8 | 3 (30) |
| | C | +40 to +60 | 0.5 | 3 (30) |
| | D | +10 to +40 | 0.5 | 8.5 (85) |
| | E | -10 to +10 | 0.5 | 9.0 (90) |

The structure of the thin-films and the magnetic properties of the thin-films along the surface of each thin-film were evaluated. The result is shown in table 2.

The structure of each thin-film ( the smaller and larger diameters of the prismatic grains of iron nitride, and the angle which the axes of the prismatic grains make with the non-magnetic base) were evaluated in the following manner. The side of each magnetic recording medium opposite to the thin-film was notched with a razor, and the magnetic recording medium was folded along the notch with the thin-film directed outward. Then the crack of the thin-film thus formed (a cross-section of the thin-film) was photographed through a scanning electron microscope (S-800 manufactured by Hitachi Seisakusho) at x5000 magnification, and the photograph was measured by an image analyzer (Ibas-I manufactured by Carl Zeiss).

Further the magnetic properties of the thin-films along the surface of each thin-film were evaluated in the same manner as in the embodiment 1.

Table 2

|   | smaller diameter (Å) | larger diameter (Å) | tilt (degree) | coercive force (Oe) | max. flux density (Gauss) | squareness ratio |
|---|---|---|---|---|---|---|
| A | 150 | 700 | 40 | 870 | 3000 | 0.25 |
| B | 200 | 1000 | 45 | 800 | 4700 | 0.36 |
| C | 500 | 2000 | 65 | 700 | 5200 | 0.34 |
| D | 1000 | 3500 | 85 | 630 | 6100 | 0.31 |
| E | 1000 | 9000 | 85-90 | 350 | 7300 | 0.42 |

Thereafter each of the magnetic recording media A to E were applied with back coat and stearic acid in the form of MEK solution was applied to the iron nitride ferromagnetic thin-film in an amount of 10mg/m$^2$. Then each sample was cut to 8mm widths, loaded in an 8mm video cassette, and the electromagnetic conversion properties were measured.

As the 8mm video cassette, a modified Fuji Hi-8 Movie M870HR (manufactured by Fuji Photo Film) was used. C/N ratio was measured using a Spectrum Analyzer 3585A (manufactured by Hewlett Packard). Carrier frequency was 7MHz and noise frequency was 4MHz. The result is shown in table 3.

Table 3

|   | C/N(dB) | Y-output | noise(dB) |
|---|---------|----------|-----------|
| A | -2.2 | -4.2 | -2.0 |
| B | -0.6 | -2.4 | -1.8 |
| C | 0 | 0 | 0 |
| D | -0.4 | +0.9 | +1.3 |
| E | -2.8 | +3.0 | +5.8 |

As can be understood from table 3, in the magnetic recording media B, C and D, the output was larger, noise was lower and the C/N ratio was larger than in the magnetic recording media A and B.

As can be understood from the description above, the magnetic recording medium in accordance with the present invention has excellent magnetic properties suitable for high-density recording and at the same time, exhibits high resistance to corrosion.

## Claims

1. A method of manufacturing a magnetic recording medium comprising a non-magnetic base and an iron nitride ferromagnetic thin-film formed on the non-magnetic base characterized by the step of
causing an iron vapor flow to impinge upon the non-magnetic base at an angle of incidence of not smaller than 30° while exposing the non-magnetic base to a nitrogen ion current at an acceleration voltage not higher than 200V so that the current density of the nitrogen ion current on the non-magnetic base is not lower than 0.3mA/cm$^2$, the nitrogen ion current containing therein nitrogen as the major component.

2. A method as defined in Claim 1 in which said angle of incidence of the iron vapor flow is in the range of 40° to 90°.

3. A magnetic recording medium comprising a non-magnetic base and an iron nitride ferromagnetic thin-film formed on the non-magnetic base characterized in that
the iron nitride ferromagnetic thin-film is formed by causing an iron vapor flow to impinge upon the non-magnetic base at an angle of incidence of not smaller than 30° while exposing the non-magnetic base to a nitrogen ion current at an acceleration voltage not higher than 200V so that the current density of the nitrogen ion current on the non-magnetic base is not lower than 0.3mA/cm$^2$, the nitrogen ion current containing therein nitrogen as the major component.

4. A magnetic recording medium as defined in Claim 3 in which said angle of incidence of the iron vapor flow is in the range of 40° to 90°.

5. A magnetic recording medium comprising a non-magnetic base and an iron nitride ferromagnetic thin-film formed on the non-magnetic base characterized in that
the iron nitride ferromagnetic thin-film is formed of prismatic grains of iron nitride which are 200 to 1000Å in smaller diameter and 1000 to 3500 Å in larger diameter and the angle which the axes of the prismatic grains make with the non-magnetic base is in the range of 45° to 85°.

# F I G .1

# F I G .2

# F I G .3A

# F I G .3B

# F I G . 4

F I G. 5

# F I G.6A

# F I G.6B

# F I G.7

EP 0 471 360 A1

## DOCUMENTS CONSIDERED TO BE RELEVANT

EP 91113656.2

| Category | Citation of document with indication, where appropriate, of relevant passages | Relevant to claim | CLASSIFICATION OF THE APPLICATION (Int. Cl. 5) |
|---|---|---|---|
| P,X | EP - A2 - 0 415 155 (SANYO ELECTRIC CO.LTD.) * Fig. 1; claims 1,10; page 4, lines 12-18; abstract * -- | 1-5 | G 11 B 5/84 G 11 B 5/64 G 11 B 5/62 |
| A | DATABASE WPIL, NO. 87-287 709 DERWENT PUBLICATIONS LTD., London, GB * Abstract * & JP-A-62-200 526 (SEIKO DENSHI KOGYO K.K.) 04-09-1987 -- | 1-5 | |
| A | DATABASE WPIL, NO. 87-287 708 DERWENT PUBLICATIONS LTD., London, GB * Abstract * & JP-A-62-200 525 (SEIKO DENSHI KOGYO K.K.) 04-09-1987 ---- | 1-5 | |

TECHNICAL FIELDS SEARCHED (Int. Cl.5)

G 11 B 5/00

The present search report has been drawn up for all claims

| Place of search | Date of completion of the search | Examiner |
|---|---|---|
| VIENNA | 29-10-1991 | BERGER |

EPO FORM 1503 03.82 (P0401)